# DEMANDE DE BREVET EUROPEEN

(11) **EP 0 905 992 A1**
(43) Date de publication de la demande: **31.03.1999**
(21) Numéro de dépôt: 98203189.0
(22) Date de dépôt: 23.09.1998
(51) Int. Cl.: H04Q 7/32

(54) **Système de télécommunications, procédé de localisation et station mobile pour un tel système**

(30) Priorité: 30.09.1997 FR 9712148
(71) Demandeur: Koninklijke Philips Electronics N.V., 5621 BA Eindhoven (NL)
(72) Inventeur: Guilbaud, Yvan, 75008 Paris (FR); Legoupil, Franck, 75008 Paris (FR)
(74) Mandataire: Chaffraix, Jean

(57) **Abrégé**

L'invention s'applique à un système de transmissions radioélectriques muni de stations radio de base formant une zone de couverture radio dans laquelle un mobile est susceptible de fournir au système une indication de position grâce à une procédure de localisation. En cas d'échec d'une tentative de localisation à un instant donné, le mobile bénéficiant à cet instant d'une couverture radio insuffisante, il ne peut plus recevoir de communication pendant un certain labs de temps. L'invention prévoit de raccourcir ce labs de temps en dotant le mobile de moyens pour évaluer la qualité de la couverture radio dont il bénéficie et pour déclencher automatiquement une nouvelle tentative de localisation dès que la qualité de la couverture est suffisante.

## Description

L'invention concerne un système de transmissions radioélectriques ayant une zone de couverture à l'intérieur de laquelle il est susceptible d'échanger des signaux radio avec au moins une station mobile comportant :
- des moyens de localisation munis d'une première commande pour effectuer à des instants donnés, une localisation dite courante de la station mobile dans la zone de couverture,
- des moyens de mesure d'au moins un paramètre de qualité de réception des signaux radio pour fournir un niveau de qualité associé à ce paramètre.

Elle concerne également un procédé de localisation d'une station mobile dans une zone de couverture d'un système de radiotransmissions, le procédé comportant des étapes de localisation déclenchées par la station mobile pour indiquer au système sa position dans la zone de couverture à des instants donnés.

L'invention concerne enfin une station mobile d'un système de transmissions radioélectriques ayant une zone de couverture dans laquelle ladite station et le système peuvent échanger des signaux radio ayant une qualité de réception mesurable, ladite station comportant des moyens de localisation pour indiquer sa position audit système dans la zone de couverture, et des moyens de mesure de ladite qualité de réception.

L'invention s'applique à tous systèmes de télécommunications radio et en particulier aux systèmes de téléphonie cellulaire fonctionnant selon des normes de type GSM (de l'anglais Global System for Mobile communications), NMT (de l'anglais Nordic Mobile Telephone), DCS1800 (de l'anglais Digital Communication System, fonctionnant à 1800 MHz), PCS1900 (Personal Communication System, fonctionnant à 1900 MHz), etc.

L'architecture cellulaire de ces systèmes implique des procédures de localisation pour fournir à un organe central des informations sur la position courante des stations mobiles qui sont rattachées au système afin que celui-ci puisse router efficacement les communications vers les stations destinataires. Pour cela, l'organe central gère une liste des stations mobiles dites "joignables" par le système, afin d'identifier les stations capables de recevoir des communications.

Ces procédures de localisation générant un trafic important sur les canaux radio, il est nécessaire de les déclencher le moins souvent possible pour ne pas saturer le système.

La recommandation ETS 300 557 de l'ETSI (de l'anglais European Telecommunications Standards Institute) pour la norme GSM fournit des critères pour optimiser la gestion de ces procédures de localisation.

Selon cette recommandation, lors d'un échec de localisation dû à une trop faible couverture radio pour établir une connexion (cas du RANDOM_ACCESS_FAILED), la station mobile est placée dans un état dit IDLE_NOT_UPDATED où elle est réputée injoignable par le système. En effet, à l'instant où la tentative de localisation a échoué, la station mobile se trouvait dans une zone où la couverture radio était insuffisante pour lui permettre d'établir une liaison radio de bonne qualité en vue de recevoir des communications. L'état IDLE_NOT_UPDATED lui est ainsi affecté pour éviter de saturer le système en transmettant des communications qui ont une très faible probabilité d'aboutir.

La station mobile reste alors dans l'état IDLE_NOT_UPDATED jusqu'à ce qu'un événement se produise, parmi les trois suivants :
- la station mobile change de cellule,
- un timer de localisation périodique expire (il s'agit du T3212 défini dans la recommandation citée),
- la station mobile tente d'établir une communication.

Le rôle du timer périodique est de confirmer au système toutes les T3212 x 6 minutes, par une localisation dite périodique, la présence de la station mobile dans une même zone géographique. Si la station change de zone géographique, une localisation de type normal est déclenchée.
En cas d'échec de localisation périodique, le système considère le mobile éteint ou non joignable et le supprime de la liste des joignables jusqu'à ce qu'une localisation soit effectuée avec succès.

Ainsi, selon ladite recommandation, le timer périodique peut expirer entre 6 minutes et 24 heures après son chargement, en fonction de la région de couverture. Cela implique que dans les cas très défavorables où la station de base se trouve dans une région mal couverte comportant des zones d'ombre et qu'aucun des deux autres événements ne se produit avant l'expiration du timer périodique, la station mobile peut rester injoignable durant plusieurs heures, ce qui peut être très préjudiciable.

Pourtant pendant ce temps, la station mobile a pu s'être déplacée, sans changer de cellule, de façon à bénéficier d'une couverture suffisante pour transmettre une communication. Mais comme aucune procédure de localisation n'a été déclenchée, conformément à la recommandation citée, la station mobile est toujours dans l'état IDLE_NOT_UPDATED, le système ne connait pas sa position courante et ne peut donc pas lui transmettre de communication.

Un objet de l'invention est de fournir des moyens pour remédier dans une large mesure aux inconvénients laissés par la recommandation ETS 300 557, en définissant une nouvelle condition pour déclencher une procédure de localisation auprès du système.

Pour cela, un système de transmissions radio tel que celui mentionné dans le préambule est remarquable en ce que les moyens de localisation comportent une deuxième commande activée par un organe de décision coopérant avec lesdits moyens de mesure pour déclencher une localisation dite spéciale en fonction des niveaux de qualité mesurés.

La nouvelle condition susceptible de générer une procédure de localisation dépend alors de la qualité de réception des signaux radio transmis à la station mobile par le système. L'organe de décision permet ainsi en fonction de la qualité mesurée, de déclencher une localisation spéciale (car non prévue par la norme) qui aura une forte probabilité d'aboutir.

L'invention apporte l'avantage considérable par rapport à la recommandation citée, de permettre à une station mobile réputée injoignable par le système de devenir joignable dès qu'elle reçoit une couverture radio suffisante pour se localiser. Pour cela, il est prévu un système du genre mentionné ci-dessus, l'organe de décision comportant des moyens de détection d'un échec de localisation courante, remarquable en ce que le déclenchement de la deuxième commande est conditionné par la détection d'un échec de localisation courante (de type RANDOM_ACCESS_FAILED d'après la norme citée, cet échec plaçant la station mobile dans l'état IDLE_NOT_UPDATED).

En ce qui concerne un procédé de localisation du genre évoqué dans le préambule, l'invention prévoit qu'en cas d'échec d'une étape de localisation à un instant donné, la station mobile bénéficiant à cet instant d'une couverture radio ne satisfaisant pas à une condition prédéfinie dite de qualité radio (c'est-à-dire que la couverture vue par la station mobile est insuffisante pour établir une connexion), une nouvelle étape de localisation est automatiquement déclenchée à la détection d'un signal de couverture lui indiquant que ladite condition est satisfaite.

En effet, la couverture radio vue à un instant donné par la station mobile peut être insuffisante pour établir une connexion bien qu'un critère de qualité tel que défini dans la norme utilisée puisse être satisfait. Le procédé prévoit, pour remédier à cet inconvénient, de définir une nouvelle condition de qualité compatible avec le critère de qualité défini dans la norme pour déclencher une localisation.

L'invention concerne également une station mobile capable de réaliser un tel procédé. Pour cela, une station mobile telle que mentionnée dans le préambule est remarquable en ce qu'elle comporte de plus, un organe de commande pour déclencher une localisation en fonction des résultats desdites mesures.

L'invention est très avantageuse, notamment dans les régions montagneuses et en rase campagne où la couverture présente des zones d'ombre, c'est-à-dire des zones hors de portée radio du système dans lesquelles une localisation est impossible. En effet, l'investissement en infrastructures nécessaire pour couvrir correctement ces régions est trop élevé par rapport à la rentabilité espérée, étant donné les difficultés de transmission dues au relief et/ou la faible densité de population.

La description suivante, faite en regard des dessins ci-annexés, le tout donné à titre d'exemple non limitatif fera bien comprendre comment l'invention peut être réalisée.
La figure 1 représente un exemple de système selon l'invention.
La figure 2 représente un exemple de procédé de localisation selon l'invention.
La figure 3 représente un schéma bloc d'une station mobile selon l'invention.

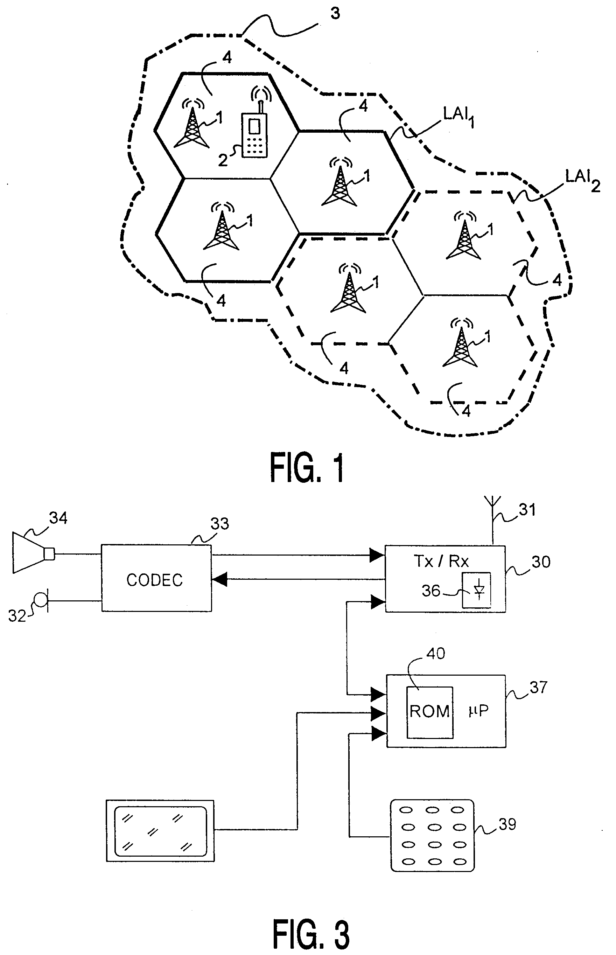

La figure 1 représente l'architecture d'un sous-système radio de type GSM fonctionnant conformément à la recommandation ETS 300 557. Il s'agit ici d'un exemple de système parmi d'autres dans lequel l'invention peut avantageusement être mise en oeuvre.

Ce système est constitué d'un réseau de stations radio de base 1, dites bases, dont le rôle est de réaliser l'interface radioélectrique entre le système et les stations mobiles 2, dites mobiles, qui lui sont rattachées. Le réseau de stations de base a une portée radioélectrique qui couvre une région géographique 3 divisée en cellules 4, chaque cellule 4 étant couverte par une base 1. Le mobile 2 peut se déplacer librement d'une cellule à l'autre tout en étant joignable par l'intermédiaire des bases qui couvrent ces cellules.

Un organe central gère des fichiers de données contenant des informations sur la position courante de chaque mobile afin par exemple, de router les appels jusqu'au mobile destinataire. Ces informations permettent au système de connaître la position des mobiles dans une certaine zone géographique dite zone de localisation, avec une précision spatiale qui varie d'une seule cellule à un ensemble de plusieurs cellules.

Dans l'exemple de la figure, la zone de couverture 3 du système est divisée en deux zones de localisation LAI₁ et LAI₂ contenant chacune trois cellules.

Les bases 1 diffusent en continu des informations sur elles-mêmes ainsi que sur leur environnement, comme par exemple : un identifiant de zone de localisation LAI (de l'anglais Location Area Identifier) et un identifiant de station de base BSI (de l'anglais Base Station Identifier). Grâce au LAI, le mobile connaît la zone de localisation à laquelle appartient la base avec laquelle il est en train de dialoguer. Si le mobile détecte un changement de LAI, simultanément à un changement de BSI, une commande de localisation dite courante ou de type "normal" est actionnée et déclenche une procédure de localisation pour mettre à jour les données concernant sa position courante par rapport au réseau afin que le système puisse router ses appels vers sa nouvelle zone de localisation. La commande de localisation dite courante est également actionnée pour effectuer une localisation de type périodique et à chaque mise sous tension du mobile si le système l'exige, pour une localisation de type "IMSI attach" spécifiant que le mobile est sous tension et joignable.

Dans certains cas, la tentative de localisation échoue à cause d'une insuffisance de couverture ; c'est-à-dire que la qualité du signal radio reçu par le mobile 2 est insuffisante pour permettre un dialogue avec la base 1. Cela est souvent dû à une puissance de réception trop faible des signaux radio reçus par le mobile. On se limitera à ce paramètre pour la suite de la description, mais d'autres paramètres dits de qualité radio peuvent être responsables d'un échec de localisation ; comme par exemple un taux d'erreur de transmissions trop élevé ou toute autre paramètre de qualité significatif pour le système utilisé.

Pour la norme GSM, un cas d'échec courant est défini dans la recommandation citée et porte le label RANDOM_ACCESS_FAILED. Un mobile n'ayant pas réussi à établir une connexion radio pour sa localisation à cause d'une couverture trop faible se déclare dans l'état RANDOM_ACCESS_FAILED et réitère la tentative de localisation jusqu'à 8 fois. Si aucune de ces tentatives n'aboutit, il est automatiquement placé dans l'état IDLE_NOT_UPDATED et devient injoignable par le réseau puisque celui-ci ne connaît plus sa position courante.

Selon l'invention, le mobile déclenche une commande de localisation spéciale dès que l'un au moins des quatre événements suivants se produit :
- le mobile change de cellule,
- un timer de localisation périodique expire (il s'agit du T3212),
- le mobile tente d'établir une communication,
- le mobile voit le niveau de puissance de sa cellule courante atteindre un seuil estimé suffisant pour réitérer une tentative de localisation.

Selon le mode de réalisation préféré de l'invention, une commande de localisation spéciale est ainsi déclenchée à la détection d'un signal dit de couverture indiquant que le mobile reçoit suffisamment de puissance radio d'une station de base pour tenter de se localiser.

Conformément à la norme GSM, le mobile mesure très fréquemment le niveau de puissance des signaux radio qu'il reçoit du réseau pour sélectionner les meilleurs canaux de fréquences disponibles pour communiquer. Ces mesures sont stockées en mémoire vive dans le mobile et sont mises à jour régulièrement.

L'invention prévoit de déclencher la commande de localisation spéciale sur la base de ces résultats de mesure. Par exemple, on peut définir un seuil de puissance dont la détection par un organe de décision du type microprocesseur déclenche automatiquement la commande de localisation spéciale. Le microprocesseur contrôle ainsi les résultats de mesure et déclenche la commande à la détection d'un résultat supérieur ou égal au seuil prédéfini. On peut également surveiller les variations de niveaux de puissance mesurés et définir une amplitude de variation, c'est-à-dire une valeur de saut de puissance, dont la détection par un dispositif de détection de saut associé déclenche la commande de localisation spéciale. D'autres moyens équivalents utilisant ces résultats de mesure pour déclencher une localisation peuvent être envisagés sans sortir du cadre de l'invention.

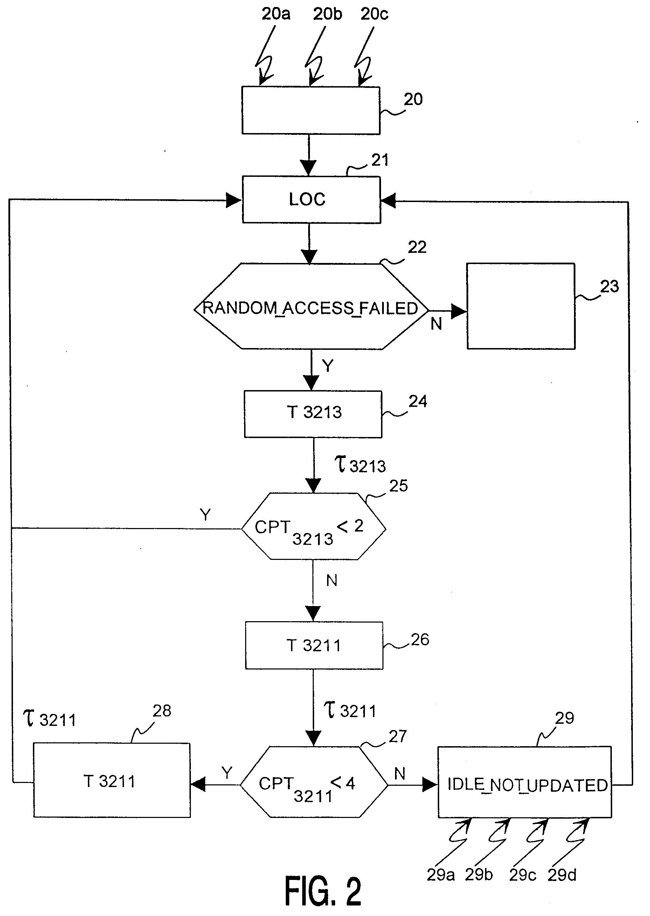

La figure 2 représente un exemple de procédé selon l'invention pouvant être mis en oeuvre dans une station mobile du système représenté à la figure 1.

Le procédé commence à la case 20, le mobile est dans un état quelconque. La détection de l'un au moins des trois événements représentés par des flèches brisées pointant la case 20, déclenche la commande dite de localisation courante suite :
- à un changement de LAI (20a, déclenchement d'une localisation de type normale),
- à une expiration du timer T3212 (20b, déclenchement d'une localisation de type périodique) ou encore
- à une mise sous tension du mobile si le système l'exige (20c, déclenchement d'une localisation de type "IMSI attach").

Le procédé passe alors à l'étape 21 (LOC) pour effectuer la procédure de localisation adéquate en fonction de l'événement déclencheur.

A la case 22, on teste le résultat de l'étape 21 et en particulier la détection d'un cas de RANDOM_ACCESS_FAILED.

Si le résultat du test est négatif (N), le mobile effectue à la case 23 le traitement classique prévu par la norme GSM et les spécification du constructeur, en fonction de la procédure de localisation effectuée.

Si le résultat est positif (Y), c'est-à-dire que la localisation a échoué dans un cas de RANDOM_ACCESS_FAILED, un timer T3213 est armé à la case 24.

A son expiration, après un labs de temps τ₃₂₁₃, on teste à la case 25 l'état d'un compteur CPT₃₂₁₃ pour connaître le nombre d'expirations consécutives du timer (CPT₃₂₁₃<2).

Si ce nombre est strictement inférieur à 2 (Y), le procédé reprend à la case 21 pour retenter une localisation.

Sinon (N), on passe à la case 26 pour armer un autre timer noté T3211. A l'expiration du timer T3211 après un labs de temps τ₃₂₁₁, on teste le nombre d'expirations consécutives de ce timer (CPT₃₂₁₁<4).

Si ce nombre est strictement inférieur à 4 (Y), le procédé se poursuit à la case 28, avec un nouvel armement du timer T3211.

A son expiration, le procédé reprend à la case 21 pour recommencer une procédure de localisation.

Si le nombre d'expirations consécutives de ce timer atteint ou dépasse 4 (N), on passe à l'étape 29 où le mobile est placé dans l'état IDLE_NOT_UPDATED. Sa position étant alors inconnue du réseau, il ne peut recevoir d'appel entrant. Le mobile reste dans cet état jusqu'à ce que l'un des quatre événements prévus par l'invention et représentés par des flèches brisées pointant la case 29, se produise :
- 29a pour l'expiration du timer T3212,
- 29b pour un changement de cellule courante,
- 29c pour un appel sortant et
- 29d pour la détection d'un signal de couverture indiquant que la qualité de couverture est suffisante (par exemple, la puissance de réception des signaux radio provenant d'une station de base a atteint un seuil prédéfini).

Si l'un de ces événements se produit la commande de localisation spéciale est déclenchée et le procédé retourne alors à l'étape 21 pour effectuer une localisation.

La figure 3 représente un schéma bloc général d'un radiotéléphone tel que celui qui porte la référence 2 dans la figure 1. Il comporte des circuits d'émission-réception (Tx/Rx) 30, couplés à une antenne 31. Le circuit d'émission Tx est connecté à un microphone 32 via un circuit de codage de parole (CODEC) 33. Le circuit de réception Rx est connecté à un haut-parleur 34 via le circuit 33 et est doté de moyens de mesure de la puissance de réception des signaux radio captés par l'antenne 31. Ces moyens comprennent au moins un dispositif de détection de seuil 36 ou un dispositif de détection de saut de puissance pour informer un organe de commande 37 du niveau de puissance des signaux reçus et eventuellement déclencher une commande de localisation spéciale. Les opérations du radiotéléphone sont contrôlées par l'organe 37 qui comporte un microprocesseur µP pour effectuer le traitement des signaux émis et reçus par les circuits 30 ainsi que ceux provenant d'une interface utilisateur constituée d'un écran 38 et d'un clavier 39. L'organe 37 comporte également une mémoire non volatile 40 de type ROM (de l'anglais Read Only Mémory) pour stocker le programme de fonctionnement du téléphone exécuté par le microprocesseur. L'invention peut être réalisée en modifiant ce programme de façon à y intégrer le procédé de localisation décrit à la figure 2.

Un système de télécommunications, un procédé de localisation ainsi qu'une station mobile d'un tel système viennent d'être décrits à l'aide d'exemples pour permettre à ladite station mobile de recevoir des appels entrants dès que sa couverture radio est satisfaisante. L'invention est très avantageuse dans les régions où la couverture présente des zones d'ombre qui occasionnent des échecs de localisation fréquents. Globalement, la proportion des mobiles joignables par le système à un instant donné est augmentée grâce à l'invention.

## Revendications

1. Système de transmissions radioélectriques ayant une zone de couverture à l'intérieur de laquelle il est susceptible d'échanger des signaux radio avec au moins une station mobile comportant :
- des moyens de localisation munis d'une première commande pour effectuer à des instants donnés, une localisation dite courante de la station mobile dans la zone de couverture,
- des moyens de mesure d'au moins un paramètre de qualité de réception des signaux radio pour fournir un niveau de qualité associé à ce paramètre,
caractérisé en ce que les moyens de localisation comportent une deuxième commande activée par un organe de décision coopérant avec lesdits moyens de mesure pour déclencher une localisation dite spéciale en fonction des niveaux de qualité mesurés.

2. Système selon la revendication 1, l'organe de décision comportant des moyens de détection d'un échec de localisation courante,
caractérisé en ce que le déclenchement de la deuxième commande est conditionné par la détection d'un échec de localisation courante.

3. Système selon l'une des revendications 1 ou 2, caractérisé en ce que lesdits moyens de mesure comportent un dispositif de détection de saut pour détecter un saut dans lesdits niveaux de qualité mesurés.

4. Système selon l'une des revendications 1 à 3, les signaux radio ayant une puissance de réception variable, caractérisé en ce que ladite puissance de réception constitue ledit paramètre de qualité.

5. Système selon l'une des revendications 1 à 4, caractérisé en ce qu'il fonctionne conformément à une recommandation du type ETS 300 557 de l'ETSI (de l'anglais European Telecommunications Standards Institute).

6. Procédé de localisation d'une station mobile dans une zone de couverture radioélectrique d'un système de télécommunications, le procédé comportant des étapes de localisation déclenchées par la station mobile pour indiquer au système sa position dans la zone de couverture à des instants donnés,
caractérisé en ce qu'en cas d'échec d'une étape de localisation à un instant donné, la station bénéficiant à cet instant d'une couverture radio ne satisfaisant pas à une condition prédéfinie dite de qualité radio, une nouvelle étape de localisation est automatiquement déclenchée à la détection d'un signal de couverture lui indiquant que ladite condition est satisfaite.

7. Procédé selon la revendication 6, caractérisé en ce que ladite condition dépend d'un niveau de qualité de réception des signaux radio échangés entre le système et la station mobile.

8. Procédé selon la revendication 7, une station mobile étant dite localisée lorsque sa position est mise à jour et mémorisée au sein dudit système à la suite d'une étape de localisation,
caractérisé en ce que, la station mobile se trouvant provisoirement non localisée suite à un échec de localisation, on effectue à des instants donnés des mesures du niveau de la qualité de réception des signaux radio, pour déclencher ledit signal de couverture en fonction du niveau mesuré.

9. Procédé selon la revendication 8, caractérisé en ce que l'on déclenche ledit signal de couverture dès que l'on détecte un saut dans les mesures dudit niveau de qualité, supérieur à une première valeur de consigne.

10. Procédé selon la revendication 8, caractérisé en ce que l'on déclenche ledit signal de couverture dès que l'on mesure un niveau de qualité de réception supérieur à une deuxième valeur de consigne.

11. Procédé selon l'une des revendications 6 à 10, caractérisé en ce qu'il est mis en oeuvre dans une station mobile d'un système de télécommunications conforme à une recommandation du type ETS 300 557 de l'ETSI (de l'anglais European Telecommunications Standards Institute).

12. Station mobile d'un système de transmissions radioélectriques ayant une zone de couverture dans laquelle ladite station et le système peuvent échanger des signaux radio ayant une qualité de réception mesurable, ladite station comportant des moyens de localisation pour indiquer sa position audit système dans la zone de couverture, et des moyens de mesure de ladite qualité de réception,
caractérisée en ce qu'elle comporte de plus, un organe de commande pour déclencher une localisation en fonction des résultats desdites mesures.

13. Station mobile selon la revendication 12, caractérisée en ce que l'organe de commande coopère avec un dispositif de détection de saut pour déclencher une localisation à la détection d'un saut dans les résultats de mesures.

14. Station mobile selon la revendication 12, caractérisée en ce que l'organe de commande coopère avec un dispositif de détection de seuil pour déclencher une localisation à la détection d'un résultat de mesure supérieur à une valeur de consigne.

15. Station mobile selon l'une des revendications 12 à 14, caractérisée en ce qu'elle est susceptible d'échanger des signaux radio avec un système de télécommunications dont le fonctionnement est conforme à une recommandation du type ETS 300 557 de l'ETSI (de l'anglais European Telecommunications Standards Institute).
